# EUROPÄISCHE PATENTSCHRIFT

(11) **EP 1 622 068 B1**
(45) Veröffentlichungstag und Bekanntmachung des Hinweises auf die Patenterteilung: **07.07.2010**
(21) Anmeldenummer: 04018178.6
(22) Anmeldetag: 30.07.2004
(51) Int. Cl.: G06K 19/077, G06K 7/00

(54) **PCMCIA Kontaktiereinheit für Chipkarten**
PCMCIA module for a chip card
Module PCMCIA pour carte à puce

(43) Veröffentlichungstag der Anmeldung: 01.02.2006
(73) Patentinhaber: STOCKO Contact GmbH & Co. KG, 42327 Wuppertal (DE)
(72) Erfinder: Klatt Dieter,, 42489 Wülfrath (DE)
(74) Vertreter: Stenger, Watzke & Ring

(56) Entgegenhaltungen:
- EP-A- 0 791 890
- EP-A- 1 006 479
- WO-A-03/107254
- DE-A- 19 731 379
- DE-A- 19 935 528

## Beschreibung

Die Erfindung betrifft eine Kontaktiereinheit nach PCMCIA-Norm für kartenförmige Trägerelemente elektronischer Baugruppen nach ISO 7816, zur Anordnung in einem Kontaktiereinheitenaufnahmeschacht nach PCMCIA-Norm einer derartige Kontaktiereinheiten nutzenden elektronischen Einrichtung, mit einem steckkartenförmigen Gehäuse, das eine Basisplatte, wenigstens eine im wesentlichen parallel zur Basisplatte angeordnete Leiterplatte, die mit einer an einer Stirnseite des Gehäuses angeordneten Steckverbinderleiste nach PCMCIA-Norm elektrisch verbunden ist und die an einer Oberfläche Kontaktelemente zur Kontaktierung der elektronischen Baugruppen wenigstens eines kartenförmigen Trägerelements aufweist, und eine zur Basisplatte im wesentlichen deckungsgleiche Abdeckplatte aufweist, wobei die Leiterplatte zwischen der Basisplatte und der Abdeckplatte im Gehäuse angeordnet ist und zusammen mit der Abdeckplatte einen schlitzartigen, an der der Steckverbinderleiste gegenüberliegenden Stirnseite des Gehäuses mündenden Einschubkanal zur Aufnahme des kartenförmigen Trägerelements bildet, und wobei die Mündung des Einschubkanals um ein einen Schlitz zum Einführen des kartenförmigen Trägerelements in den Einschubkanal ausbildendes Ansatzstück verlängert ist, welches sich in einem in Einschubrichtung des kartenförmigen Trägerelements vor der Mündung des Einschubkanals liegenden Bereich erstreckt und eine Breite aufweist, die größer ist als die Breite des Teils der Kontaktiereinheit, der sich bei bestimmungsgemäßer Verwendung der Kontaktiereinheit in einem Kontaktiereinheitenaufnahmeschacht einer derartige Kontaktiereinheiten nutzenden elektronischen Einrichtung befindet. Eine solche Kontaktiereinheit ist beispielsweise in der EP 0 696 010 B2 beschrieben.

Derartige Kontaktiereinheiten, auch Chipkartenleser genannt, sind geeignet über die Steckverbinderleiste nach PCMCIA-Norm, an derartige Kontaktiereinheiten nutzende elektronischen Einrichtungen, beispielsweise Notebooks, angeschlossen zu werden. Dazu werden die Kontaktiereinheiten in entsprechend vorgesehene Kontaktiereinheitenaufnahmeschächten derartige Kontaktiereinheiten nutzender elektronischer Einrichtungen eingeschoben, wobei die Leiterplatte der Kontaktiereinheit über die Steckverbinderleiste mit der Elektronik der derartige Kontaktiereinheiten nutzenden elektronischen Einrichtungen elektrisch verbunden wird. Die Kontaktiereinheiten dienen dort der Auswertung von Daten oder der Durchführung von Anwendungen, wie beispielsweise der Öffnung der Zugangsberechtigung zu Datennetzen, der Ausführung von Homebanking oder auch zur Speichererweiterung, Telefonnutzung und dergleichen. Eine weitere Anwendung derartiger Kontaktiereinheiten ist als Common Interface in Verbindung mit dem digitalen Fernsehen gegeben. Für Notebook- und/oder Digital-TV-Applikationen werden üblicherweise eine Kontaktiereinheiten nach PCMCIA-Typ II eingesetzt, die eine Dicke von etwa 5 mm aufweisen und in einem Kontaktiereinheitenaufnahmeschacht nach PCMCIA-Norm Typ II anordbar sind. Dabei kommen unter anderem um das Ansatzstück verlängerte Versionen der Kontaktiereinheiten zum Einsatz, bei denen das Gehäuse im Bereich der der Steckverbinderleiste gegenüberliegenden Stirnseite, mit einer Verlängerung versehen ist, die sowohl dazu dient, das einzusetzende kartenförmige Trägerelement (Chipkarte) zu führen als auch die Handhabung der Kontaktiereinheit zu erleichtern. Der durch das Ansatzstück gegebene Verlängerungsbereich stellt eine Art vorgelagerte Führung für die Chipkarte dar und stabilisiert die Kontaktiereinheit als Chipkartenleser mechanisch für die mitunter stark beanspruchenden Betriebsbedingungen auf dem Consumermarkt.

Es ist üblich, mehrere - in der Regel zwei - derartiger Kontaktiereinheiten gleichzeitig übereinander in entsprechend ausgebildeten Kontaktiereinheitenaufnahmeschächten nach PCMCIA-Norm einer derartige Kontaktiereinheiten nutzenden elektronischen Einrichtung - mitunter zur kombinativen Anwendung - anzuordnen. Insbesondere bei Notebooks oder sogenannten Set-Top-Boxen für Digital-TV-Applikationen ist bei einer solchen Übereinanderanordnung von Kontaktiereinheiten darauf zu achten, dass das Ansatzstück einer Kontaktiereinheit von seinen Abmessungen her nicht in den Bereich des Kontaktiereinheitenaufnahmeschachtes einer anderen Kontaktiereinheit ragt.

Bei der Verwendung von tragbaren Computern, wie Notebooks oder Laptops, als datenverarbeitende, derartige Kontaktiereinheiten nutzende elektronische Einrichtungen ist ferner ein fortwährend hoher Bedarf in der Nutzung von Cryptotechnologien gegeben, um Daten gegen unbefugten Zugriff zu sichern. Kontaktiereinheiten finden in diesem Bereich insbesondere Verwendung als Leseeinheit für Chipkarten die als sogenannte Smart-Cards für eine Identitätsprüfung herangezogen werden und somit quasi die Funktion eines Schlüssels übernehmen. Dabei sind auf der ein kartenförmiges Trägerelement elektronischer Baugruppen darstellenden Chipkarte nach ISO 7816 die jeweiligen cryptologischen Schlüssel gespeichert. Anwendung hierfür besteht beispielsweise in den Bereichen Online-Banking, wie etwa Internet-Banking nach dem HBCI-Standard oder der Zugangskontrolle zu Datennetzen. Die Identifikation und Autorisierung des berechtigten Anwenders kann dabei zusammen mit einer vom Anwender über eine Tastatur oder dergleichen Eingabemittel einzugebenden Geheimzahl, wie etwa einer PIN, erfolgen. Auch in der Anwendung von Set-Top-Boxen für Digital-TV-Applikationen zur Entschlüsselung von Fernsehkanälen, insbesondere für sogenanntes Pay-TV, ist eine Nutzung von Cryptotechnologien unabdingbar.

Nachteilig bei diesen Vorgehensweisen ist, dass die Eingabe einer Authentifizierung, insbesondere eine Authentizitätscodes oder dergleichen, über die Tastatur einer eine Kontaktiereinheit nutzenden elektronischen Einrichtung, wie einem sogenannten Notebook, durch eine in der Regel illegale Software, einem sogenannten "Trojaner" oder dergleichen, welche vom Benutzer der eine Kontaktiereinheit nutzenden elektronischen Einrichtung unbeabsichtigt seitens der elektronischen Einrichtung installiert wurde, abgehört, dass heißt erfasst werden können. Bei Set-Top-Boxen für Digital-TV-Applikationen ist in der Regel mangels Vorhandenseins entsprechender Eingabemittel - wie einer Tastatur - die Eingabe einer Authentifizierung, insbesondere eine Authentizitätscodes oder dergleichen, nicht möglich.

In Anbetracht dieses Standes der Technik, liegt der Erfindung die A u f g a b e zugrunde, eine Kontaktiereinheit der eingangs genannten Art unter Meidung der beschriebenen Nachteile zu verbessern, insbesondere derart, dass ein gleichzeitiges Übereinanderanordnen von Kontaktiereinheiten in entsprechenden Kontaktiereinheitenaufnahmeschächten einer derartige Kontaktiereinheiten nutzenden elektronischen Einrichtung bei gleichzeitig stabiler und sicherer Führung des kartenförmigen Trägerelements sowie einfacher und sicherer Handhabung der Kontaktiereinheit mittels des Ansatzstückes gewährleistet ist. Ferner soll auch bei hoher Sicherheit bezüglich eines Zugriffs von Unbefugten eine einfachere Handhabung hinsichtlich einer Authentifikationsprüfung bewerkstelligbar sein.

Die Aufgabe ist erfindungsgemäß an einer Kontaktiereinheit der eingangs genannten Art, dadurch g e l ö s t , dass das Ansatzstück eine Dicke aufweist, die kleiner ist als die Dicke des Teils der Kontaktiereinheit, der sich bei bestimmungsgemäßer Verwendung der Kontaktiereinheit in einem Kontaktiereinheitenaufnahmeschacht einer derartige Kontaktiereinheiten nutzenden elektronischen Einrichtung befindet.

Durch diese Ausgestaltung ist ein gleichzeitiges Übereinanderanordnen von Kontaktiereinheiten in entsprechenden Kontaktiereinheitenaufnahmeschächten einer derartige Kontaktiereinheiten nutzenden elektronischen Einrichtung bei gleichzeitig stabiler und sicherer Führung des kartenförmigen Trägerelements sowie einfacher und sicherer Handhabung der Kontaktiereinheit mittels des Ansatzstückes gewährleistet. Vorteilhafterweise ist der Schlitz im Ansatzstück fluchtend zum Einschubkanal ausgebildet, so dass die Führung des kartenförmigen Trägerelementes als auch die Handhabung desselben beim Einführen in den Einschubkanal der Kontaktiereinheit einfach und sicher erfolgen kann.

Dabei kann es zur Verbesserung der Führung für die Chipkarte vorteilhaft sein, den Ansatz U-förmig, d. h. mit Seitenschenkeln auszugestalten. Für besondere Anwendungsfälle kann auch eine obere Abdeckung des ansonsten offen U-förmigen Ansatzsteiles vorgesehen sein. Beide Maßnahmen sind für sich als auch in Kombination geeignet, die Führung und Handhabung des kartenförmigen Trägerelements als auch die Stabilität der Kontaktiereinheit als solcher weiter zu verbessern.

Eine weitere vorteilhafte Ausgestaltung der Erfindung sieht vor, dass die Abdeckung des Ansatzstückes eine gegenüber der Dicke der Abdeckplatte verringerte Dicke aufweist, so dass zwischen der Abdeckung des Ansatzstückes und der Abdeckplatte ein Absatz mit der Dicke der Differenz der beiden Dicken gegeben ist. In einer bevorzugten Ausgestaltung der Erfindung weist der Absatz eine Dicke von etwa 0,8 mm aufweist.

In einer besonders vorteilhaften Ausgestaltung der Erfindung ist das Ansatzstück mit wenigstens einem Eingabemittel versehen, welches mit der Leiterplatte elektrisch verbunden ist, vorteilhafterweise über dünne Leitungen und/oder Flexkabel. In einer weiteren vorteilhaften Ausgestaltung der Erfindung ist das Eingabemittel eine Folientastatur, welche auf dem Ansatzstück aufgebracht ist, vorzugsweise auf der Abdeckung des Ansatzstückes. Durch die hinsichtlich der Dicke geringere Ausbildung des Ansatzstückes gegenüber dem Teil der Kontaktiereinheit, der sich bei bestimmungsgemäßer Verwendung der Kontaktiereinheit in einem Kontaktiereinheitenaufnahmeschacht einer derartige Kontaktiereinheiten nutzenden elektronischen Einrichtung befindet ist so ein Freiraum gegeben, welcher vorteilhafterweise für ein erfindungsgemäßes Eingabemittel genutzt werden kann, vorteilhafterweise ohne dass bei einem Übereinanderanordnen von wenigstens zwei Kontaktiereinheiten das mit einem Eingabemittel versehene Ansatzstück einer Kontaktiereinheit von seinen Abmessungen her in den Bereich des Kontaktiereinheitenaufnahmeschachtes einer anderen Kontaktiereinheit ragt.

In einer weiteren Ausgestaltung der Erfindung weist das Eingabemittel einen Taster auf, welcher die Kontaktiereinheit bei Betätigung in ihren Ausgangszustand zurücksetzt, sogenannter Reset-Taster.

Gemäß einem besonders vorteilhaften Vorschlag der Erfindung ist das Eingabemittel für eine Authentifikationsprüfung nutzbar. In einer besonders bevorzugten Ausgestaltung der Erfindung weist das Eingabemittel einen Sensor zur Erfassung biometrischer Daten auf, mit denen die Authentizität von Personen oder Personengruppen feststellbar ist. Die erfindungsgemäße Verwendung eines Sensors zur Erfassung biometrischer Daten ermöglicht eine eindeutige und nahezu fälschungssichere Identifikation von Anwendern durch die sensorische Erfassung biometrischer Daten, wie etwa eines Fingerabdrucks oder der menschlichen Netzhaut, auf einfache und schnelle Weise. Ein Zugriff durch Nichtberechtigte ist aufgrund der Individualität der biometrischen Daten somit auch bei Diebstahl ausgeschlossen.

Durch diese Maßnahmen wird einzeln oder in Kombination erfindungsgemäß ein Authentifikationssystem bereitgestellt, welches eine einfache Handhabung gewährleistet, die insbesondere den Anforderungen einer mobilen Verwendung von Kontaktiereinheiten in Notebooks oder Laptops als auch seitens Set-Top-Boxen für Digital-TV-Applikationen Rechnung trägt.

In einer zweckmäßigen Ausgestaltung der Erfindung ist die Basisplatte mit der Abdeckplatte wenigstens im Bereich der Steckverbinderleiste und im Bereich der Ecken der der Steckverbinderleiste gegenüberliegenden Stirnseite des Gehäuses verbunden. Die Verbindung kann beispielsweise über Schweißlaschen, Ultraschallverschweißung, Verklebung oder Verschraubung erfolgen. Eine weitere vorteilhafte Ausgestaltung der Erfindung sieht vor, dass der Einschubkanal über seine gesamte Länge in Einschubrichtung des kartenförmigen Trägerelements beidseitig durchgehend offen ist.

Weitere Einzelheiten, Merkmale und Vorteile des Gegenstandes der Erfindung ergeben sich aus der nachfolgenden Beschreibung der zugehörigen Zeichnung, in der verschiedene Ausführungsformen einer erfindungsgemäßen Kontaktiereinheit schematisch dargestellt sind. In der Zeichnung zeigt:
- Fig. 1: eine schematisch perspektivische Darstellung einer ersten Ausführungsform einer erfindungsgemäßen Kontaktiereinheit;
- Fig. 2: eine schematische Seitenansicht der Ausführungsform der Fig. 1 und
- Fig. 3: eine schematisch perspektivische Darstellung einer zweiten Ausführungsform einer erfindungsgemäßen Kontaktiereinheit.

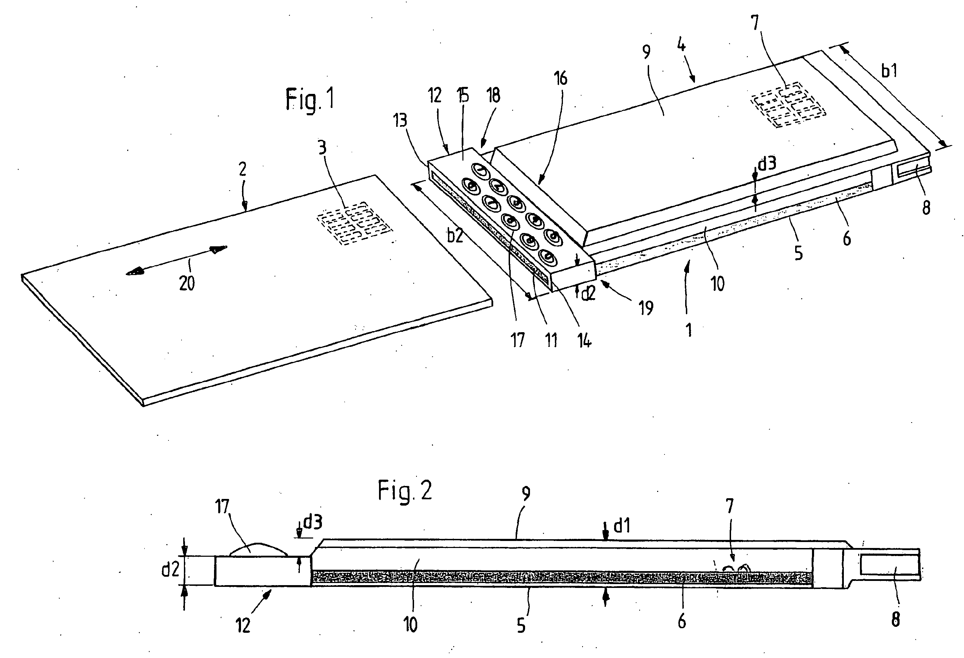

Die in Fig. 1 dargestellte Ausführungsform der Erfindung zeigt eine als Chipkartenleser ausgebildete Kontaktiereinheit 1, die vorgesehen ist, über eine normgemäße PCMCIA-Schnittstelle mit einer Set-Top-Box für Digital-TV-Anwendungen (nicht dargestellt) kontaktiert zu werden.

Die Kontaktiereinheit 1 besteht aus einem zweischaligen Außengehäuse 4 mit einer Basisplatte 5, einem PCMCIA-Anschlussfeld in Form einer Steckverbinderleiste 8 mit 68 Polen an dem in Einschubrichtung in die Set-Top-Box gemäß Pfeil vorderen stirnseitigen Ende (in Fig. 1 rechts gelegen), mit einem Ansatzstück 12 am gegenüberliegenden stirnseitigen Ende für die Einführung einer ISO 7816 Chipkarte als kartenförmiges Trägerelement 2 elektronischer Baugruppen 3 und einer parallel mit Abstand zur Basisplatte 5 sich erstreckenden Abdeckplatte 9, welche mit der Basisplatte 5 im Bereich der Steckverbinderleiste 8 starr verbunden ist. Im Inneren des Gehäuses 2 ist mit Abstand parallel zur Basisplatte 5 eine Leiterplatte 6 angeordnet, derart, dass zwischen der Leiterplatte 6 und der Abdeckplatte 9 ein Einschubkanal 10 für die ISO 7816 Chipkarte 2 gebildet wird, die über einen im Ansatzstück 12 verlaufenden Einschubschlitz 11 in die Kontaktiereinheit 1 einschiebbar ist.

Die Chipkarte 2 lässt sich in Richtung des in Fig. 1 gezeigten Doppelpfeils 20 in die Kontaktiereinheit 1 einschieben und aus dieser wieder herausziehen, wobei sich über das auf der Oberfläche angeordnete Chipfeld 3 der Chipkarte 2 und ein inneres Kontaktfeld 7 auf der Leiterplatte 6 eine Kontaktierung vornehmen lässt, die eine Verarbeitung der Chipkarte 2 ermöglicht, wenn die Kontaktiereinheit 1 in den Einschubschlitz der Set-Top-Box eingesetzt und mit dessen PCMCIA-Schnittstelle über die Steckverbinderleiste 8 elektrisch verbunden ist.

Aus der Zeichnung gemäß Fig. 1 ist erkennbar, dass der Einschubkanal 10 über seine gesamte Länge in Einschubrichtung der Chipkarte beidseitig durchgehend offen ist und dass die Basisplatte 5 mit der Abdeckplatte 9 im Bereich der Steckverbinderleiste 8 und im Bereich der Ecken 18, 19 der der Steckverbinderleiste 8 gegenüberliegenden Stirnseite des Gehäuses 4 verbunden ist.

Das den Einschubkanal 10 für das kartenförmige Trägerelements 2 verlängernde Ansatzstück 12, befindet sich in einem in Einschubrichtung des kartenförmigen Trägerelements 2 vor der Mündung des Einschubkanals 10 liegenden Bereich und weist einen Schlitz 11 auf, der fluchtend zum Einschubkanal 10 durch seitliche Führungsstegen 13 und 14 sowie eine obere und untere Abdeckung 15 ausgebildet ist.

Wie insbesondere anhand von Fig. 2 zu erkennen ist, weist das Ansatzstück 12 dabei eine Breite b2 auf, die größer ist als die Breite b1 des Teils der Kontaktiereinheit 1, der sich bei bestimmungsgemäßer Verwendung der Kontaktiereinheit 1 in einem Kontaktiereinheitenaufnahmeschacht einer derartige Kontaktiereinheiten 1 nutzenden elektronischen Einrichtung, bei der Ausführungsform gemäß Fig. 1 der Set-Top-Box, befindet. Ferner weist das Ansatzstück 12 eine Dicke d2 auf, die kleiner ist als die Dicke d1 des Teils der Kontaktiereinheit 1, der sich bei bestimmungsgemäßer Verwendung der Kontaktiereinheit 1 in einem Kontaktiereinheitenaufnahmeschacht einer derartige Kontaktiereinheiten 1 nutzenden elektronischen Einrichtung befindet (vgl. Fig. 2).

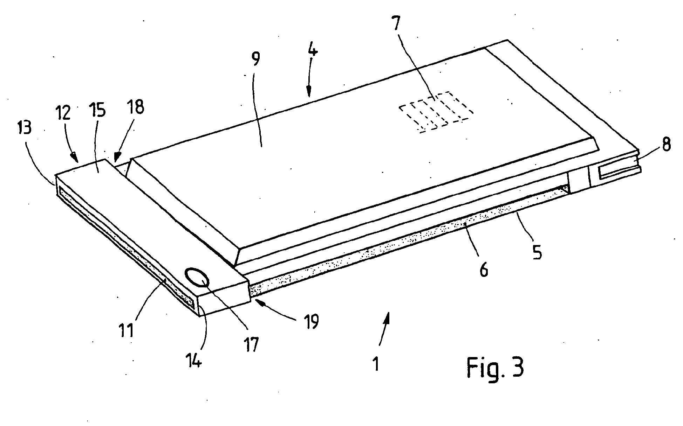

Bei den Ausführungsformen gemäß Fig. 1 und Fig. 3 weist das Ansatzstück 12 eine gegenüber der Dicke d1 verringerte Dicke d2 auf, so dass zwischen der Abdeckung 15 des Ansatzstückes 12 und der Abdeckplatte 9 ein Absatz 16 mit der Dicke der Differenz der beiden Dicken gegeben ist (vgl. Fig. 2). Die Dicke d3 des Absatzes 16 beträgt bei den Ausführungsformen gemäß Fig. 1 und Fig. 3 etwa 0,8 mm.

Bei der in Fig. 1 dargestellten Ausführungsform einer Kontaktiereinheit 1 ist das Ansatzstück 12 mit einer Folientastatur als Eingabemittel 17 versehen ist. Die Folientastatur 17 ist mit der Leiterplatte 6 über hier nicht explizit dargestellte dünne Leitungen und/oder Flexkabel elektrisch verbunden und auf der Abdeckung 15 des Ansatzstückes 12 durch Aufkleben angebracht. Das Eingabemittel 17 ist für eine Authentifikationsprüfung mit der die Authentizität von Personen oder Personengruppen feststellbar ist nutzbar.

Die in Fig. 3 dargestellte Ausführungsform einer Kontaktiereinheit 1 entspricht in Aufbau, Abmessungen und Funktion im wesentlichen der Ausführungsform der in Fig. 1 dargestellten Kontaktiereinheit 1. Anstelle einer Folientastatur als Eingabemittel 17 wie bei der Ausführungsform nach Fig. 1 weist die Kontaktiereinheit nach Fig. 3 als Eingabemittel 17 einen Taster auf, welcher in die Abdeckung 15 des Ansatzstückes 12 eingelassen ist. Bei Betätigung des Tasters 17 wird die Kontaktiereinheit 1 gemäß Fig. 3 in ihren Ausgangszustand zurückgesetzt, ein sogenannter "Reset".

Die in den Figuren der Zeichnung dargestellten Ausführungsbeispiele der Erfindung dienen lediglich der Erläuterung der Erfindung und sind für diese nicht beschränkend.

### Bezugszeichenliste

- 1: Kontaktiereinheit
- 2: kartenförmiges Trägerelement/Chipkarte
- 3: elektronische Baugruppen (kartenförmiges Trägerelement/Chipkarte (2))
- 4: Gehäuse
- 5: Basisplatte
- 6: Leiterplatte
- 7: Kontaktelemente (Leiterplatte (6))
- 8: Steckverbinderleiste
- 9: Abdeckplatte
- 10: Einschubkanal
- 11: Schlitz (Ansatzstück (12))
- 12: Ansatzstück
- 13: Führungssteg (Ansatzstück (12))
- 14: Führungssteg (Ansatzstück (12))
- 15: Abdeckung (Ansatzstück (12))
- 16: Absatz
- 17: Eingabemittel/Tastatur/Taster
- 18: Ecke (Gehäuse (4))
- 19: Ecke (Gehäuse (4))
- 20: Doppelpfeil
- b1: Breite (Kontaktiereinheit (1))
- b2: Breite (Ansatzstück (12))
- d1: Dicke (Kontaktiereinheit (1))
- d2: Dicke (Ansatzstück (12))
- d3: Dicke (Absatz (16))

## Patentansprüche

1. Kontaktiereinheit (1) nach PCMCIA-Norm für kartenförmige Trägerelemente (2) elektronischer Baugruppen (3) nach ISO 7816, zur Anordnung in einem Kontaktiereinheitenaufnahmeschacht nach PCMCIA-Norm einer derartige Kontaktiereinheiten (1) nutzenden elektronischen Einrichtung, mit einem steckkartenförmigen Gehäuse (4), das eine Basisplatte (5), wenigstens eine im wesentlichen parallel zur Basisplatte (5) angeordnete Leiterplatte (6), die mit einer an einer Stirnseite des Gehäuses (4) angeordneten Steckverbinderleiste (8) nach PCMCIA-Norm elektrisch verbunden ist und die an einer Oberfläche Kontaktelemente (7) zur Kontaktierung der elektronischen Baugruppen (3) wenigstens eines kartenförmigen Trägerelements (2) aufweist, und eine zur Basisplatte (5) im wesentlichen deckungsgleiche Abdeckplatte (9) aufweist, wobei die Leiterplatte (6) zwischen der Basisplatte (5) und der Abdeckplatte (9) im Gehäuse (4) angeordnet ist und zusammen mit der Abdeckplatte (9) einen schlitzartigen, an der der Steckverbinderleiste (8) gegenüberliegenden Stirnseite des Gehäuses (4) mündenden Einschubkanal (10) zur Aufnahme des kartenförmigen Trägerelements (2) bildet, und wobei die Mündung des Einschubkanals (10) um ein einen Schlitz (11) zum Einführen des kartenförmigen Trägerelements (2) in den Einschubkanal (10) ausbildendes Ansatzstück (12) verlängert ist, welches sich in einem in Einschubrichtung des kartenförmigen Trägerelements (2) vor der Mündung des Einschubkanals (10) liegenden Bereich erstreckt und eine Breite (b2) aufweist, die größer ist als die Breite (b1) des Teils der Kontaktiereinheit (1), der sich bei bestimmungsgemäßer Verwendung der Kontaktiereinheit (1) in einem Kontaktiereinheitenaufnahmeschacht einer derartige Kontaktiereinheiten (1) nutzenden elektronischen Einrichtung befindet,
**dadurch gekennzeichnet,**
**dass** das Ansatzstück (12) eine Dicke (d2) aufweist, die kleiner ist als die Dicke (d1) des Teils der Kontaktiereinheit (1), der sich bei bestimmungsgemäßer Verwendung der Kontaktiereinheit (1) in einem Kontaktiereinheitenaufnahmeschacht einer derartige Kontaktiereinheiten (1) nutzenden elektronischen Einrichtung befindet.

2. Kontaktiereinheit (1) nach Anspruch 1, **dadurch gekennzeichnet, dass** der Schlitz (11) im Ansatzstück (12) fluchtend zum Einschubkanal (10) ausgebildet ist.

3. Kontaktiereinheit (1) nach Anspruch 1 oder Anspruch 2, **dadurch gekennzeichnet, dass** das Ansatzstück (12) U-förmig, das heißt mit seitlichen Führungsstegen (13, 14) ausgestaltet ist.

4. Kontaktiereinheit (1) nach Anspruch 3, **gekennzeichnet, durch** eine obere Abdeckung (15) des U-förmigen Ansatzstückes (12).

5. Kontaktiereinheit (1) nach Anspruch 4, **dadurch gekennzeichnet, dass** die Abdeckung (15) des Ansatzstückes (12) eine gegenüber der Dicke der Abdeckplatte (9) verringerte Dicke aufweist, so dass zwischen der Abdeckung (15) des Ansatzstückes (12) und der Abdeckplatte (9) ein Absatz (16) mit der Dicke der Differenz der beiden Dicken (d1 - d2 = d3) gegeben ist.

6. Kontaktiereinheit (1) nach Anspruch 5, **dadurch gekennzeichnet, dass** der Absatz (16) eine Dicke (d3) von etwa 0,8 mm aufweist.

7. Kontaktiereinheit (1) nach einem der Ansprüche 1 bis 6, **dadurch gekennzeichnet, dass** das Ansatzstück (12) mit wenigstens einem Eingabemittel (17) versehen ist, welches mit der Leiterplatte (6) elektrisch verbunden ist.

8. Kontaktiereinheit (1) nach Anspruch 7, **dadurch gekennzeichnet, dass** das Eingabemittel (17) mit der Leiterplatte (6) über dünne Leitungen und/oder Flexkabel elektrisch verbunden ist.

9. Kontaktiereinheit (1) nach Anspruch 7 oder Anspruch 8, **dadurch gekennzeichnet, dass** das Eingabemittel (17) eine Folientastatur ist, welche auf dem Ansatzstück (12) aufgebracht ist, vorzugsweise auf der Abdeckung (15) des Ansatzstückes (12).

10. Kontaktiereinheit (1) nach einem der Ansprüche 7 bis 9, **dadurch gekennzeichnet, dass** das Eingabemittel (17) einen Taster aufweist, welcher die Kontaktiereinheit (1) bei Betätigung in ihren Ausgangszustand zurücksetzt (Reset).

11. Kontaktiereinheit (1) nach einem der Ansprüche 7 bis 10, **dadurch gekennzeichnet, dass** das Eingabemittel (17) für eine Authentifikationsprüfung nutzbar ist.

12. Kontaktiereinheit (1) nach einem der Ansprüche 7 bis 11, **dadurch gekennzeichnet, dass** das Eingabemittel (17) einen Sensor zur Erfassung biometrischer Daten aufweist, mit denen die Authentizität von Personen oder Personengruppen feststellbar ist.

13. Kontaktiereinheit (1) nach einem der Ansprüche 1 bis 12, **dadurch gekennzeichnet, dass** die Basisplatte (5) mit der Abdeckplatte (9) wenigstens im Bereich der Steckverbinderleiste (8) und vorzugsweise im Bereich der Ecken (18, 19) der der Steckverbinderleiste (8) gegenüberliegenden Stirnseite des Gehäuses (4) verbunden ist.

14. Kontaktiereinheit nach einem der Ansprüche 1 bis 13, **dadurch gekennzeichnet, dass** der Einschubkanal (10) über seine gesamte Länge in Einschubrichtung des kartenförmigen Trägerelements (2) beidseitig durchgehend offen ist.

## Claims

1. A contacting unit (1) according to PCMCIA standard for card-shaped carrier elements (2) of electronic components (3) according to ISO 7816, for arrangement in a contacting unit accommodating slot according to PCMCIA standard of an electronic device, which uses such contacting units (1), comprising a housing (4) designed in a plug-in card-shaped manner, which encompasses a base plate (5), at least one printed circuit board (6), which is arranged so as to be substantially parallel to the base plate (5) and which is electrically connected according to PCMCIA standard to a plug-in connector strip (8), which is arranged on a front face of the housing (4) and which, on a surface, encompasses contact elements (7) for contacting the electronic components (3) of at least one card-shaped carrier element (2) and which encompasses a cover plate (9), which is substantially congruent with the base plate (5), wherein the printed circuit board (6) is arranged between the base plate (5) and the cover plate (9) in the housing (4) and together with the cover plate (9) forms a slit-like insertion channel (10), which opens on the front face of the housing (4) located opposite to the plug-in connector strip (8) for accommodating the card-shaped carrier element (2), and wherein the opening of the insertion channel (10) is extended by an attachment piece (12), which embodies a slit (11) for inserting the card-shaped carrier element (2) into the insertion channel (10) and which extends in an area, which is located in insertion direction of the card-shaped carrier element (2) in front of the opening of the insertion channel (10) and which encompasses a width (b2), which is greater than the width (b1) of the part of the contacting unit (1), which, in response to an intended use of the contacting unit (1), is located in a contacting unit accommodating slot of an electronic device, which uses such contacting units (1),
**characterized in**
**that** the attachment piece (12) encompasses a thickness (d2), which is smaller than the thickness (d1) of the part of the contacting unit (1), which is located in a contacting unit accommodating slot of an electronic device, which uses such contacting units (1), in response to an intended use of the contacting unit (1).

2. The contacting unit (1) according to claim 1, **characterized in that** the slot (11) in the attachment piece (12) is embodied so as to be aligned with the insertion channel (10).

3. The contacting unit (1) according to claim 1 or claim 2, **characterized in that** the attachment piece (12) is embodied in a U-shaped manner, that is, that it is embodied with lateral guide bars (13, 14).

4. The contacting unit (1) according to claim 3, **characterized by** an upper cover (15) of the U-shaped attachment piece (12).

5. The contacting unit (1) according to claim 4, **characterized in that** the cover (15) of the attachment piece (12) encompasses a thickness, which is reduced as compared to the thickness of the cover plate (9), so that a ledge (16) comprising the thickness of the difference of the two thicknesses (d1 - d2 = d3) is given between the cover (15) of the attachment piece (12) and the cover plate (9).

6. The contacting unit (1) according to claim 5, **characterized in that** the ledge (16) encompasses a thickness (d3) of approximately 0.8 mm.

7. The contacting unit (1) according to one of claims 1 to 6, **characterized in that** the attachment piece (12) is connected to at least one input means (17), which is electrically connected to the printed circuit board (6).

8. The contacting unit (1) according to claim 7, **characterized in that** the input means (17) is electrically connected to the printed circuit board (6) via thin lines and/or flex cables.

9. The contacting unit (1) according to claim 7 or claim 8, **characterized in that** the input means (17) is a plastic foil keyboard, which is attached on the attachment piece (12), preferably on the cover (15) of the attachment piece (12).

10. The contacting unit (1) according to one of claims 7 to 9, **characterized in that** the input means (17) encompasses a push-button, which resets the contacting unit (1) into its initial state in response to actuation.

11. The contacting unit (1) according to one of claims 7 to 10, **characterized in that** the input means (17) can be used for an authentication test.

12. The contacting unit (1) according to one of claims 7 to 11, **characterized in that** the input means (17) encompasses a sensor for detecting biometric data, by means of which the authenticity of persons or groups of persons can be determined.

13. The contacting unit (1) according to one of claims 1 to 12, **characterized in that** the base plate (5) is connected to the cover plate (9) at least in the area of the plug-in connector strip (8) and preferably in the area of the corners (18, 19) of the front face of the housing (4) located opposite the plug-in connector strip (8).

14. The contacting unit according to one of claims 1 to 13, **characterized in that** the insertion channel (10) is continuously open across its entire length in insertion direction of the card-shaped carrier element (2).

## Revendications

1. Unité de mise en contact (1) selon la norme PCMCIA, pour des éléments de support en forme de carte (2) de groupes de construction électroniques (3) selon ISO 7816, destinée à être disposée dans un compartiment récepteur d'unité de mise en contact selon la norme PCMCIA d'un dispositif électronique servant à de telles unités de mise en contact (1), avec un boîtier (4) en forme de carte d'extension, comportant une plaque de base (5), au moins une plaque à circuits imprimés (6) disposée quasiment parallèlement à la plaque de base (5), qui est reliée électriquement à une réglette de connecteurs (8) selon la norme PCMCIA, disposée sur une face avant du boîtier (4) et qui comporte des éléments de contact (7) sur une face supérieure, pour la mise en contact des groupes de construction électroniques (3) d'au moins un élément de support en forme de carte (2), ainsi qu'une plaque de recouvrement (9) coïncidant essentiellement avec la plaque de base (5), dans laquelle la plaque à circuits imprimés (6) est disposée dans le boîtier (4), entre la plaque de base (5) et la plaque de recouvrement (9), et forme, avec la plaque de recouvrement (9), un canal d'insertion (10) du genre fente, débouchant sur la face avant du boîtier (4) qui est opposée à la réglette de connecteurs (8), pour la réception de l'élément de support en forme de carte (2), et dans laquelle l'embouchure du canal d'insertion (10) est prolongée par un embout (12) formant une fente (11) pour l'insertion de l'élément de support en forme de carte (2) dans le canal d'insertion (10), lequel embout s'étend dans une région située devant l'embouchure du canal d'insertion (10) dans le sens d'insertion de l'élément de support en forme de carte (2), et présente une largeur (b2) supérieure à la largeur (b1) de la pièce de l'unité de mise en contact (1), qui, lors de l'utilisation conforme de l'unité de mise en contact (1), se trouve dans un compartiment récepteur d'unité de mise en contact d'un dispositif électronique servant à de telles unités de mise en contact (1),
**caractérisée en ce que**
l'embout (12) présente une épaisseur (d2) inférieure à l'épaisseur (d1) de la pièce de l'unité de mise en contact (1) qui, lors de l'utilisation conforme de l'unité de mise en contact (1), se trouve dans un compartiment récepteur d'unité de mise en contact d'un dispositif électronique servant à de telles unités de mise en contact (1).

2. Unité de mise en contact (1) selon la revendication 1, **caractérisée en ce que** la fente (11) dans l'embout (12) est conçue en alignement avec le canal d'insertion (10).

3. Unité de mise en contact (1) selon la revendication 1 ou la revendication 2, **caractérisée en ce que** l'embout (12) est conçu en forme de U, c'est-à-dire avec des branches latérales de guidage (13, 14).

4. Unité de mise en contact (1) selon la revendication 3, **caractérisée par** un recouvrement supérieur (15) de l'embout en forme de U (12).

5. Unité de mise en contact (1) selon la revendication 4, **caractérisée en ce que** le recouvrement (15) de l'embout (12) présente une épaisseur réduite par rapport à l'épaisseur de la plaque de recouvrement (9), de sorte qu'un talon (16) d'une épaisseur équivalant à la différence entre les deux épaisseurs (d1 - d2 = d3) est formé entre le recouvrement (15) de l'embout (12) et la plaque de recouvrement (9).

6. Unité de mise en contact (1) selon la revendication 5, **caractérisée en ce que** le talon (16) présente une épaisseur (d3) d'environ 0,8 mm.

7. Unité de mise en contact (1) selon l'une des revendications 1 à 6, **caractérisée en ce que** l'embout (12) est pourvu d'au moins un moyen de saisie (17) électriquement relié avec la plaque à circuits imprimés (6).

8. Unité de mise en contact (1) selon la revendication 7, **caractérisée en ce que** le moyen de saisie (17) est électriquement relié avec la plaque à circuits imprimés (6), par des lignes fines et/ou des câbles souples.

9. Unité de mise en contact (1) selon la revendication 7 ou la revendication 8, **caractérisée en ce que** le moyen de saisie (17) est un clavier à membrane, appliqué sur l'embout (12), de préférence sur le recouvrement (15) de l'embout (12).

10. Unité de mise en contact (1) selon l'une des revendications 7 à 9, **caractérisée en ce que** le moyen de saisie (17) comporte une touche permettant de remettre l'unité de mise en contact (1) dans son état initial (Reset) lors de l'actionnement.

11. Unité de mise en contact (1) selon l'une des revendications 7 à 10, **caractérisée en ce que** le moyen de saisie (17) peut être utilisé pour un contrôle d'authentification.

12. Unité de mise en contact (1) selon l'une des revendications 7 à 11, **caractérisée en ce que** le moyen de saisie (17) comporte un détecteur pour la détection de données biométriques, permettant de déterminer l'authenticité de personnes ou de groupes de personnes.

13. Unité de mise en contact (1) selon l'une des revendications 1 à 12, **caractérisée en ce que** la plaque de base (5) est reliée à la plaque de recouvrement (9), au moins dans la région de la réglette de connecteurs (8), et de préférence dans la région des coins (18, 19) de la face avant du boîtier (4) qui est opposée à la réglette de connecteurs (8).

14. Unité de mise en contact (1) selon l'une des revendications 1 à 13, **caractérisée en ce que** le canal d'insertion (10) est ouvert en continu sur l'ensemble de sa longueur, dans le sens d'insertion de l'élément de support en forme de carte (2).
